# EUROPÄISCHE PATENTANMELDUNG

(11) **EP 4 279 914 A1**
(43) Veröffentlichungstag der Anmeldung: **22.11.2023**
(21) Anmeldenummer: 23171513.7
(22) Anmeldetag: 04.05.2023
(51) Int. Cl.: G01N 29/04, B60W 40/06, G08G 1/0968

(54) **SYSTEM ZUR WAHRNEHMUNG VON STRASSENSCHÄDEN DURCH AUTOMATISIERT BETREIBBARE FAHRZEUGE**

(30) Priorität: 17.05.2022 DE 102022204831
(71) Anmelder: ZF Friedrichshafen AG, 88046 Friedrichshafen (DE)
(72) Erfinder: Hertkorn, Michael, 88131 Bodolz (DE); Giesler, Jens, 88045 Friedrichshafen (DE)
(74) Vertreter: ZF Friedrichshafen AG

(57) **Zusammenfassung**

System zur Wahrnehmung von Straßenschäden (13) durch automatisiert betreibbare Fahrzeuge (1), wobei die automatisiert betreibbaren Fahrzeuge (1) jeweils mindestens einen Sensor (3) zur Erfassung von durch das Fahrzeug (1) beim Überfahren eines der Straßenschäden (13) erzeugtem Körperschall und/oder mindestens einen Sensor (3) zur Erfassung von beim Überfahren des Straßenschadens (13) entstehendem Luftschall umfassen, wobei das System konfiguriert ist, basierend auf Daten des mindestens einen Sensors (3) zur Erfassung von Körperschall und/oder des mindestens einen Sensors (3) zur Erfassung von Luftschall den Straßenschaden (13) wahrzunehmen; die Position des jeweiligen automatisiert betreibbaren Fahrzeuges (1) beim Überfahren des Straßenschadens (13) zu erhalten und als Position des Straßenschadens (13) mit der Information des wahrgenommenen Straßenschadens (13) zu speichern; vor einem nächsten Überfahren dieses Straßenschadens (13) von diesein automatisiert betreibbaren Fahrzeug (1) oder einem anderen der automatisiert betreibbaren Fahrzeuge (1) die Position und die Information des Straßenschadens (13) an ein Steuergerät (14) dieses oder des anderen der automatisiert betreibbaren Fahrzeuge (1) zu senden; wobei das Steuergerät (14) basierend auf der empfangenen Position und Information des Straßenschadens (13) Regel- und/oder Steuersignale bestimmt für eine Ausweichtrajektorie, auf der der Straßenschaden (13) umfahren oder überquert wird, und dieses oder das andere der automatisiert betreibbaren Fahrzeuge (1) der Ausweichtrajektorie folgt.

## Beschreibung

Die Erfindung betrifft ein System zur Wahrnehmung von Straßenschäden durch automatisiert betreibbare Fahrzeuge.

Folgende Definitionen, Beschreibungen und Ausführungen behalten ihre jeweilige Bedeutung für und finden Anwendung auf den gesamten offenbarten Erfindungsgegenstand.

Ein automatisiert betreibbares Fahrzeug ist ein Fahrzeug, beispielsweise ein LKW, PKW, Bus oder ein Güter-/Personentransportsystem, beispielsweise ein Shuttle, das über eine technische Ausrüstung, beispielsweise Umfelderfassungssensoren wie Radar, Kamera, Lidar, Mikrofone und/oder Geruchssensoren, elektronische Steuergeräte und/oder Aktuatoren, verfügt, die zur Bewältigung einer Fahraufgabe, beispielsweise Längs- und/oder Querführung, beim Steuern des Fahrzeuges den Fahrzeugführer unterstützten (SAE Level 0 bis 3) oder das Fahrzeug automatisiert ohne menschliche Eingriffe steuern (SAE Level 4 bis 5). Automatisierte Fahrfunktionen sind Fahrfunktionen für Längs- und/oder Querführung, beispielsweise Beschleunigung wie etwa Bremsen oder Lenkung, und Fahrfunktionen zur Kommunikation mit Umfeld, beispielsweise Betätigung einer Lichtanlage wie etwa Scheinwerfer oder Blinker oder Betätigung von Schallerzeugungseinrichtungen, beispielsweise einer Hupe. Ein weiteres im Anwendungsgebiet der erfindungsgemäßen Lösung liegendes Beispiel für automatisiert betreibbare Fahrzeuge sind fahrerlose Transportfahrzeuge zum Materialtransport, beispielsweise innerbetriebliche Unterfahrschlepper oder Transportfahrzeuge in Hafenarealen, beispielsweise Sattelzugmaschinen ohne Führerhaus.

Aus dem Stand der Technik sind automatische spurgeführte Personentransportsysteme, beispielsweise Personal Rapid Transit, bekannt. Beispielsweise offenbart die EP 2 360 544 B1 ein System zur Positionsbestimmung eines Fahrzeuges, das mehrere einzelne magnetische Markierungselemente verwendet, die in einer Oberfläche bereitgestellt sind, die für das Fahrzeug geeignet ist, um darauf zu fahren, wobei das System mehrere Sensoren aufweist zum Messen der magnetischen Feldstärke eines magnetischen Markierungselements der mehreren einzelnen magnetischen Markierungselemente.

Die US 5 347 456 A offenbart ein Referenzsystem für ein Fahrzeug zum Lokalisieren auf einer Fahrbahn mittels magnetischen Markierungselementen.

Die DE 10 2019 215 658 B3 offenbart ein System zur Kontrolle automatisierter Fahrfunktionen für ein automatisiert betreibbares Fahrzeug. Das System umfasst mehrere Markierungselemente, die in einer Fahrbahnoberfläche angeordnet sind, mehrere an dem Fahrzeug in einer Anordnung anordbare Sensoren, die Feldstärken einzelner der mehreren Markierungselemente messen, und eine Recheneinheit, die in Abhängigkeit der von den Sensoren gemessenen Feldstärken eine jeweilige Position der Sensoren und in Abhängigkeit der Anordnung der Sensoren eine Position des Fahrzeuges relativ zu den Markierungselementen bestimmt. Das System umfasst ferner ein Steuergerät für automatisiertes Fahren. Die Recheneinheit kontrolliert während des automatisierten Betriebs eine mit dem Steuergerät in Abhängigkeit von Signalen von Umfelderfassungssensoren des Fahrzeuges bestimmte Trajektorie für das Fahrzeug in Abhängigkeit der Position des Fahrzeuges relativ zu den Markierungselementen und Fahrzeugdaten und übersteuert oder deaktiviert im Falle einer Abweichung Steuerungssignale des Steuergeräts für Aktuatoren zur Längs- und/oder Querführung des Fahrzeuges.

Aus dem Stand der Technik sind ferner Verfahren und Vorrichtungen bekannt zur akustischen Beurteilung eines Kraftfahrzeuges. Beispielsweise offenbart die DE 10 2007 051 261 A1 eine Vorrichtung umfassend ein Mikrofon, mittels dessen akustische Signale des Kraftfahrzeuges aufgenommen werden. Eine Auswerteeinheit ermittelt Merkmale in diesen Signalen und klassifiziert diese basierend auf einer Referenz-Klassifizierung.

Ein Straßenschaden kennzeichnet einen mangelhaften Zustand einer Straßenbefestigung, beispielsweise Verlust von Mörtel oder Bindemittel aus der Fahrbahnoberfläche, die sogenannte Ausmagerung, mit resultierendem Herauslösen von oberflächennaher Gesteinskörnung, dem sogenannten Splittverlust. Ein weiteres Beispiel für einen Straßenschaden ist die Ablagerung von bituminösem Bindemittel an der Straßenoberfläche aufgrund der Verkehrsbelastung. Ein weiteres Beispiel für einen Straßenschaden sind blasenartige Aufwölbungen oder Spalten, beispielsweise als Folgeschäden von Frostaufbrüchen, auch Schlagloch genannt. Weitere Beispiele sind Spurrinnen, Risse und Abplatzungen. Neben negativen Folgen für die Bausubstanz der Straße wirken Straßenschäden negativ auf den Verkehr, beispielsweise Schäden an einem Fahrzeug, beispielsweise an Reifen, Fahrwerk und/oder Lenkung.

Die Erkennung von Straßenzuständen erfolgt im bekannten Stand der Technik typischerweise durch Kartographieren mit hochpräziser Sensortechnik in einem Referenzfahrzeug. Die Straßendaten werden anschließend herangezogen, um das Fahrzeug mithilfe von Lidar- und Radar-Informationen zu orten. Ein Straßenschaden könnte in diesen Karten vermerkt sein und entsprechend umfahren werden. Jedoch findet eine neue Kartographierung nicht ständig statt, womit ein neuer Straßenschaden nicht erkannt wird.

Automatisiert betreibbare Fahrzeuge, beispielsweise selbstfahrende Fahrzeuge, beispielsweise autonome Personentransportsysteme wie People Mover oder Shuttles, fahren häufig dieselbe Strecke ab, im öffentlichen Straßenverkehr oder auf innerbetrieblichen Arealen. Befindet sich ein Straßenschaden, beispielsweise ein Schlagloch, auf der Strecke, so fährt das selbstfahrende Fahrzeug ständig darüber, was auf Dauer zu Schäden am selbstfahrenden Fahrzeug und zu geringem Fahrkomfort der Fahrzeuginsassen führen kann. Dies gilt beispielsweise für segregated lane shuttles, welche beispielsweise dank kleiner Magnete in der Fahrbahn die vorgegebene Spur sehr präzise halten können. Ein menschlicher Fahrer würde sich nach einer Fahrt in ein Schlagloch diese Position merken und bei der nächsten Überfahrt eine andere Trajektorie wählen, um das Schlagloch zu umfahren.

Bei Identifizierung von Hindernissen mittels Kamera- und Radarsystemen werden Straßenschäden optisch nicht immer gut erkannt. Ein Radar kann ein Hindernis mit einer nennenswerten Tiefe erkennen. Ein Straßenschaden muss aber keine nennenswerte Tiefe aufweisen. Daher ist es schwierig bis unmöglich, einen Straßenschaden mit einem Radar zu erkennen. Kamerabasierte Objekterkennungsalgorithmen können einen Straßenschaden nur schwer von einer Pfütze oder bemalter Straße unterscheiden, da die schnelle Änderung des Untergrunds in Vertikalrichtung, die einen Straßenschaden ausmacht, auf dem Kamerabild sehr klein ist und daher schwer zu erkennen ist.

Eine Aufgabe der vorliegenden Erfindung war es, wie Straßenschäden verbessert erkannt werden können.

Der beanspruchte Gegenstand löst diese Aufgabe. Vorteilhafte Ausgestaltungen der Erfindung ergeben sich aus den Definitionen, den Unteransprüchen, der Zeichnung und der Beschreibung bevorzugter Ausführungsbeispiele.

Die Erfindung stellt ein System zur Wahrnehmung von Straßenschäden durch automatisiert betreibbare Fahrzeuge bereit. Die automatisiert betreibbaren Fahrzeuge umfassen jeweils mindestens einen Sensor zur Erfassung von durch das Fahrzeug beim Überfahren eines der Straßenschäden erzeugtem Körperschall und/oder mindestens einen Sensor zur Erfassung von beim Überfahren des Straßenschadens entstehendem Luftschall. Das System ist konfiguriert,
- basierend auf Daten des mindestens einen Sensors zur Erfassung von Körperschall und/oder des mindestens einen Sensors zur Erfassung von Luftschall den Straßenschaden wahrzunehmen;
- die Position des jeweiligen automatisiert betreibbaren Fahrzeuges beim Überfahren des Straßenschadens zu erhalten und als Position des Straßenschadens mit der Information des wahrgenommenen Straßenschadens zu speichern;
- vor einem nächsten Überfahren dieses Straßenschadens von diesem automatisiert betreibbaren Fahrzeug oder einem anderen der automatisiert betreibbaren Fahrzeuge die Position und die Information des Straßenschadens an ein Steuergerät dieses oder des anderen der automatisiert betreibbaren Fahrzeuge zu senden.

Basierend auf der empfangenen Position und Information des Straßenschadens bestimmt das Steuergerät Regel- und/oder Steuersignale für eine Ausweichtrajektorie, auf der der Straßenschaden umfahren oder überquert wird. Dieses oder das andere der automatisiert betreibbaren Fahrzeuge folgt der Ausweichtrajektorie.

Das Fahrzeug ist beispielsweise ein autonomes Personentransport System oder ein autonomes Shuttle, das beispielsweise im öffentlichen Verkehr, beispielsweise unter anderem auf segregated lanes, eingesetzt wird. Das Fahrzeug wird beim Überfahren des Straßenschadens in Schwingung gebracht, die durch Körperschallsensorik im Fahrzeug wahrgenommen werden. Der Sensor zur Erfassung von Körperschall ist beispielsweise ein Beschleunigungssensor oder ein Piezoelement. Der Straßenschaden kann auch akustisch wahrgenommen werden, was vorteilhaft ist, wenn Amplituden des Körperschalls relativ gering sind, beispielsweise beim Überfahren rauen Untergrunds. Der Sensor zur Erfassung von Luftschall erfasst beispielsweise Schallwechseldruckschwankungen. Beispielsweise ist der Sensor zur Erfassung von Luftschall ein Schalldrucksensors, beispielsweise ein Mikrofon oder ein Array aus Mikrofonen.

Die Position wird beispielsweise als GPS-Position erhalten. Nach einem Aspekt wird ferner die Information erhalten, welcher Reifen des Fahrzeuges den Straßenschaden überfahren hat.

Bei der nächsten Überfahrt dieser Position, also der Stelle des wahrgenommenen Straßenschadens, kann das selbstfahrende Fahrzeug durch die Ausweichtrajektorie seine Fahrbahn leicht anpassen, beispielsweise 5cm weiter links von dem Straßenschaden fahren, und so versuchen, den Straßenschaden zu umfahren. Anstatt dem ersten selbstfahrenden Fahrzeug kann auch ein anderes selbstfahrendes Fahrzeug, beispielsweise eines aus derselben Fahrzeugflotte, bei der nächsten Überfahrt der kritischen Stelle eine leicht andere Trajektorie wählen, um den Straßenschaden zu überqueren.

Nach einem weiteren Aspekt ist ein Schwellenwert für die Anzahl der nötigen Überfahrten einer kritischen Stelle, bis ein Ausweichmanöver eingeleitet wird, vorgegeben, beispielsweise größer als 1. Damit wird der Effekt von falsch-positiven Vorhersagen reduziert.

Das Steuergerät ist beispielsweise eine autonomous driving Domain ECU zur Steuerung eines automatisierten Fahrbetriebs, beispielsweise eines fahrerlosen, vollautomatisierten oder autonomen Fahrbetriebs. Die autonomous driving Domain umfasst Umfelderfassungssensoren, deren Signale die Domain ECU verarbeitet und beispielsweise in Form von Steuersignalen den Antriebs-, Lenkungs- und Bremssystemen bereitstellt für eine autonome Regelung und Steuerung der Längs- und/oder Querführung. Das Steuergerät kann beispielsweise einen Mehrkernprozessor und Speichermodule umfassen. Der Mehrkernprozessor ist für einen Signal-/Datenaustausch mit Speichermodulen konfiguriert. Beispielsweise umfasst der Mehrkernprozessor ein Bussystem. Die Speichermodule bilden den Arbeitsspeicher. Die Speichermodule sind beispielsweise RAM, DRAM SDRAM oder SRAM. Das Steuergerät umfasst nach einem Aspekt wenigstens einen zentralen Verarbeitungsprozessor. Das Steuergerät kann auch wenigstens einen Grafikprozessor umfassen. Nach einem Aspekt umfasst der Grafikprozessor wenigstens eine Prozesseinheit, die speziell zum Ausführen von Tensor-und/oder Matrixmultiplikationen ausgeführt ist. Tensor- und/oder Matrixmultiplikationen sind zentrale Rechenoperationen für maschinelles Lernen. Das Steuergerät ist über Schnittstellen mit Fahrzeugaktuatoren Signal übertragend verbunden, beispielsweise mit Bremsaktuatoren.

Nach einem weiteren Aspekt ist das System konfiguriert, die Regel- und/oder Steuersignale für die Ausweichtrajektorie zu erhalten, wenn das System beim Folgen der Ausweichtrajektorie von diesem oder dem anderen der automatisiert betreibbaren Fahrzeuge keinen Straßenschaden wahrnimmt, und die Regel- und/oder Steuersignale weiteren der automatisiert betreibbaren Fahrzeuge bereitzustellen. Erkennt die Straßenschadenerkennung bei erneuter Überfahrt mit der Ausweichtrajektorie keinen Straßenschaden mehr, so kann diese Ausweichtrajektorie gespeichert und beispielsweise mit einer Fahrzeugflotte geteilt werden, damit weitere Fahrzeuge den Straßenschaden entsprechend der Ausweichtrajektorie umfahren können.

Nach einem weiteren Aspekt umfassen die automatisiert betreibbaren Fahrzeuge jeweils mindestens einen Sensor zur Erfassung eines Abbildes des Straßenschadens. Das System ist konfiguriert, Daten des mindestens einen Senors zur Erfassung des Abbildes des Straßenschadens einem Baulastträger der Straße zu senden zur Beseitigung des Straßenschadens durch den Baulastträger und/oder die Daten einem Geodatendienst zu senden zur Kennzeichnung des Straßenschadens in Karten-Updates.

Der Sensor zur Erfassung des Abbildes ist beispielsweise ein Kamerasensor und das Abbild ist beispielsweise ein Lichtbild. Der Baulastträger ist beispielsweise eine Stadtverwaltung. Ein Geodatendienst ist beispielsweise ein online Kartenanbieter.

Nach einem weiteren Aspekt werden die Abbilder, beispielsweise die Lichtbilder, zunächst von Mitarbeitern einer Fahrzeugflotte analysiert, bevor sie an den Baulastträger gesendet werden.

Nach einem weiteren Aspekt umfasst das System mehrere in einer Fahrbahnoberfläche angeordnete Markierungselemente. Die automatisiert betreibbaren Fahrzeuge umfassen jeweils mindestens einen Sensor zum Erfassen von Feldstärken einzelner der mehreren Markierungselemente. Das System ist konfiguriert, in Abhängigkeit der von diesen Sensoren gemessenen Feldstärken die Position des jeweiligen automatisiert betreibbaren Fahrzeuges relativ zu den Markierungselementen zu erhalten.

Die Markierungselemente üben eine Kraftwirkung auf Probekörper aus, die sich in einem Feld einzelner Markierungselemente, das heißt einer räumlichen und zeitlichen Verteilung einer physikalischen Größe, befinden. Die Markierungselemente sind beispielsweise wie Nadeln in einer Fahrbahnoberfläche, beispielsweise Asphalt, angeordnet. Die Fahrbahnoberfläche ist beispielsweise die Oberfläche einer Autobahn, Bundesstraße, Landstraße oder einem Verkehrsweg in einem urbanen Umfeld. Beispielsweise sind die Markierungselemente entlang von Straßenmarkierungen, beispielsweise Längsmarkierungen wie etwa Leitlinie oder Fahrbahnbegrenzungslinie, Flächenmarkierungen wie etwa Radwegmarkierungen oder Quermarkierungen wie etwa Stoppschild oder Zebrastreifen, angeordnet.

Die Sensoren zum Erfassen der Feldstärke umfassen den Probekörper und sind beispielsweise über die Breite des Fahrzeuges angeordnet, beispielsweise in einem Messträger, der mehrere Sensoren, beispielsweise 25 bis 100 Sensoren, umfasst. Die Sensoren können an einem Untergrund des Fahrzeuges oder vorne an der Stoßstange beispielsweise derart angeordnet sein, dass sie einen Abstand von 30 cm zur Fahrbahnoberfläche haben. Die Sensoren werden beispielsweise mit einer Frequenz in der Größenordnung von 20 kHz bis MHz abgetastet. Nach einem Aspekt der Erfindung ist die Frequenz vom Zustand des Fahrzeuges, beispielsweise der Fahrzeuggeschwindigkeit, abhängig.

Die Markierungselemente sind beispielsweise Permanentmagnete, beispielsweise anisotrope Ferritmagnete, in der Form von Magnetnageln. Das magnetische Feld dieser Magnete ist beispielsweise in https://www.researchgate.net/profile/Carsten_Mark-graf/publication/33959284 Autonomes_Fahren mit Hilfe der Magnetnageltech-nik_Elektronische_Ressource/links/00b7d522ddf2a30264000000/Autonomes-Fahren-mit-Hilfe-der-Magnetnageltechnik-Elektronische-Ressource.pdf, Kapitel 2.1, beschrieben und ist durch diesen Verweis mitoffenbart. Die Sensoren, die die magnetische Feldstärke erfassen, können Magnetsensoren sein. Bei den Magnetsensoren kommt beispielsweise die sogenannte GMR-Technik (Giant Magneto Resistive Effect) zum Einsatz. Die Messzelle besteht aus Widerständen mit mehreren dünnen ferromagnetischen und unmagnetischen Schichten. Werden in einer klassischen Wheatstone'schen Brückenschaltung zwei GMR-Widerstände verwendet, erhält man bei Vorhandensein eines Magnetfeldes ein großes, dem Magnetfeld proportionales Signal. Ab einem festgelegten Schwellwert wird über einen Komparator ein Ausgangssignal geschaltet.

Während des automatisierten Betriebs kann das System eine mit dem Steuergerät in Abhängigkeit von Signalen von Umfelderfassungssensoren des Fahrzeuges bestimmte Trajektorie für das Fahrzeug in Abhängigkeit der Position des Fahrzeuges relativ zu den Markierungselementen und Fahrzeugdaten kontrollieren. Damit wird eine Magnetführung realisiert.

Bedingt durch die Markierungselemente, beispielsweise die Magnetnadeln, die das Fahrzeug führen, fährt das Fahrzeug sehr genau immer dieselbe Spur ab. Damit erhöht sich die Genauigkeit zur Lokalisierung von Straßenschäden relativ zur GPS-Lokalisierung. Damit kann die Straße genauer abgescannt werden. Die Kommunikation mit den weiteren der automatisiert betreibbaren Fahrzeuge, beispielsweise mit der Fahrzeugflotte, hat den weiteren Vorteil, dass alle Fahrzeuge über dieselbe Magnetführung verfügen und damit alle exakt dieselbe Spur abfahren.

Ein weiterer Aspekt betrifft die Kodierung von rechtlichen Regelsystemen über die Polarität der Magnete. Wenn ein Magnet, der in der Fahrbahnoberfläche mit Nordpol aus der Fahrbahnoberfläche hinausweisend angeordnet ist, eine 0 darstellt und ein Magnet, der in der Fahrbahnoberfläche mit Südpol aus der Fahrbahnoberfläche hinausweisend angeordnet ist, eine 1 darstellt, können verschiedene Kodierungsverfahren angewendet werden abhängig von der Anordnung der Magnete. Beispiele für Kodierungsverfahren sind in EP 1 436 187 B1, [0029] bis [0032], offenbart und sind durch Verweis mitoffenbart.

Nach einem weiteren Aspekt umfassen die automatisiert betreibbaren Fahrzeuge jeweils
- einen Speicher, in dem die Position des Straßenschadens und die Information des wahrgenommenen Straßenschadens lokal gespeichert wird;
- eine Fahrzeugkommunikationseinheit, die die Position und die Information des wahrgenommenen Straßenschadens sendet und/oder empfängt.

Die Fahrzeugkommunikationseinheit basiert beispielsweise auf Fahrzeug-zu-Fahrzeug-Kommunikation, auch V2V genannt, oder auf Fahrzeug-zu-Alles-Kommunikation, auch V2X genannt. Beispielsweise ist die Fahrzeugkommunikationseinheit eine V2V-oder V2X Domain ECU.

Nach einem weiteren Aspekt umfasst das System einen Cloud-Speicher. Das System ist konfiguriert für Cloud Computing. Die automatisiert betreibbaren Fahrzeuge umfassen jeweils eine Fahrzeugkommunikationseinheit, die die Daten des mindestens einen Sensors des jeweiligen automatisiert betreibbaren Fahrzeuges und/oder die Position und die Information des wahrgenommenen Straßenschadens an den Cloud-Speicher sendet und/oder die Position und die Information des wahrgenommenen Straßenschadens von dem Cloud-Speicher empfängt.

Das System kann damit ein verteiltes System, beispielsweise ein cloudified System sein. Die Wahrnehmung des Straßenschadens kann beispielsweise in der Cloud erfolgen. Nach einem Aspekt umfassen die Sensoren Internet of Thing Technologie und senden ihre Daten in den Cloud Speicher. Der Cloud-Infrastruktur des Systems kann eine public, private oder hybride Cloud-Infrastruktur sein.

Nach einem weiteren Aspekt ist das System konfiguriert, wenigstens auf den Daten des jeweils mindestens einen Sensors zur Erfassung von Luftschall eine Geräusch basierte Klassifizierung des Straßenschadens durchzuführen. Das System ist konfiguriert, aus den Daten des Sensors zur Erfassung von Luftschall ein Mel-Spektrogramm zu erhalten oder Mel-Frequenz-Cepstrum-Koeffizienten zu extrahieren, das Mel-Spektrogramm oder die Mel-Frequenz-Cepstrum-Koeffizienten durch ein Maschinenlernmodell zu prozessieren, das trainiert ist, aus in das Maschinenlernmodell eingegebenen Mel-Spektrogrammen oder Mel-Frequenz-Cepstrum-Koeffizienten die Straßenschäden zu inferieren, die das den Mel-Spektrogrammen oder Mel-Frequenz-Cepstrum-Koeffizienten zugrunde liegende Geräusch verursachen.

Damit wird eine gezielte Klassifikation der Geräusche und damit der Straßenschäden ermöglicht. Durch die akustische Vorverarbeitung der Rohdaten des Sensors zur Erfassung von Luftschall werden die Rohdaten verdichtet. Das Maschinenlernmodell kann ein Faltungsnetzwerk oder ein künstliches rekurrentes neuronales Netzwerk, beispielsweise ein rekurrentes Faltungsnetzwerk, sein.

Die Mel-Frequenz-Cepstrum-Koeffizienten, abgekürzt MFCC, können beispielsweise mittels open source Bibliotheken, beispielsweise der python_speech_features Bibliothek, oder der python librosa Bibliothek extrahiert werden.

Nach einem weiteren Aspekt ist das System konfiguriert, auf den Daten des jeweils mindestens einen Sensors zur Erfassung von Luftschall eine Anomalieerkennung durchzuführen. Das System ist konfiguriert, eine Vorverarbeitung der Daten basierend auf Mel-Spektrogrammen, Kurzzeit-Fourier-Transformationen oder Mel-Frequenz-Cepstrum-Koeffizienten zu erhalten, die vorverarbeiteten Daten mit gleichermaßen vorverarbeiteten Daten aus bekannten Verkehrssituationen zu vergleichen. Das System ist konfiguriert, einen Ausreißererkennungsalgorithmus auszuführen zur Erkennung von Anomalien in den Daten.

Die bekannten Verkehrssituationen können Verkehrssituationen mit ähnlich erfassten Daten sein, beispielsweise mit ähnlichen GPS-Positionen, Fahrzeuggeschwindigkeiten und/oder Beschleunigungen. Der Ausreißererkennungsalgorithmus kann ein density-based spatial clustering of applications with noise, abgekürzt DBSCAN-Algorithmus sein.

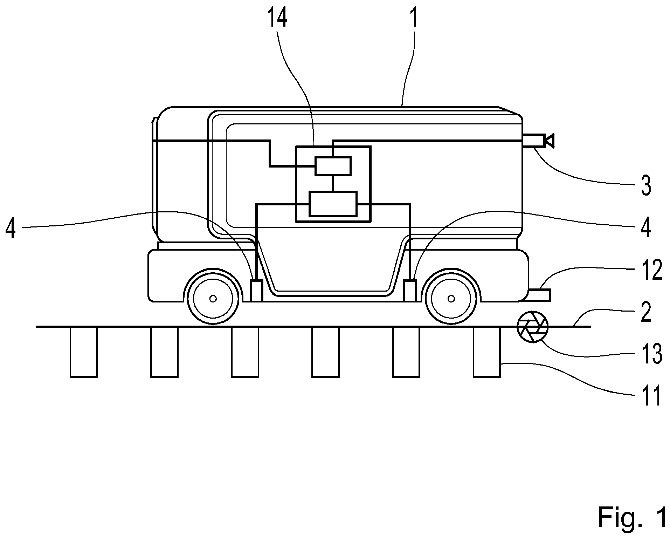

Die Erfindung wird in der folgenden Figur 1 beispielhaft erläutert. Das automatisiert betreibbare Fahrzeug 1 ist beispielsweise ein autonomes Shuttle. In einer Fahrbahnoberfläche 2 sind Markierungselemente 11, beispielsweise Magnetnadeln, angeordnet, beispielsweise entlang und parallel zu Fahrbahnmittellinien.

Die magnetischen Feldstärken der einzelnen Markierungselemente 11 und ggf. eine resultierende Feldstärke aus mehreren Feldstärken der einzelnen Markierungselemente 11 werden mit Sensoren 12, beispielsweise Magnetsensoren, gemessen. Die Sensoren 12 sind beispielsweise in einem Messträger angeordnet. Die Sensoren 12 oder der Messträger sind an einem Fahrzeug 1 anordbar.

Die Signale der Sensoren 12 werden von einem Steuergerät 14 ausgewertet. Das Steuergerät 14 bestimmt dabei die Position des Fahrzeuges 1 relativ zu den Markierungselementen 11 und überwacht eine Trajektorienplanung hinsichtlich Umfahrens von Straßenschäden 13. Der Straßenschaden 13 ist beispielsweise ein Schlagloch. Das Steuergerät 14 steht über Ausgangsschnittstellen mit Aktuatoren 4 für automatisierte Fahrfunktionen, beispielsweise Bremsaktuatoren, in Wirkverbindung.

Das Fahrzeug 1 umfasst ein Mikrofon 3 und/oder einen Körperschallsensor 3 zur Erfassung des Straßenschadens 13 beim Überfahren.

### Bezugszeichen

- 1: Fahrzeug
- 2: Fahrbahnoberfläche
- 3: Sensor
- 4: Aktuator
- 11: Markierungselement
- 12: Sensor
- 13: Straßenschaden
- 14: Steuergerät

## Patentansprüche

1. System zur Wahrnehmung von Straßenschäden (13) durch automatisiert betreibbare Fahrzeuge (1), wobei die automatisiert betreibbaren Fahrzeuge (1) jeweils mindestens einen Sensor (3) zur Erfassung von durch das Fahrzeug (1) beim Überfahren eines der Straßenschäden (13) erzeugtem Körperschall und/oder mindestens einen Sensor (3) zur Erfassung von beim Überfahren des Straßenschadens (13) entstehendem Luftschall umfassen, wobei das System konfiguriert ist,
• basierend auf Daten des mindestens einen Sensors (3) zur Erfassung von Körperschall und/oder des mindestens einen Sensors (3) zur Erfassung von Luftschall den Straßenschaden (13) wahrzunehmen;
• die Position des jeweiligen automatisiert betreibbaren Fahrzeuges (1) beim Überfahren des Straßenschadens (13) zu erhalten und als Position des Straßenschadens (13) mit der Information des wahrgenommenen Straßenschadens (13) zu speichern;
• vor einem nächsten Überfahren dieses Straßenschadens (13) von diesem automatisiert betreibbaren Fahrzeug (1) oder einem anderen der automatisiert betreibbaren Fahrzeuge (1) die Position und die Information des Straßenschadens (13) an ein Steuergerät (14) dieses oder des anderen der automatisiert betreibbaren Fahrzeuge (1) zu senden;
wobei das Steuergerät (14) basierend auf der empfangenen Position und Information des Straßenschadens (13) Regel- und/oder Steuersignale bestimmt für eine Ausweichtrajektorie, auf der der Straßenschaden (13) umfahren oder überquert wird, und dieses oder das andere der automatisiert betreibbaren Fahrzeuge (1) der Ausweichtrajektorie folgt.

2. System nach Anspruch 1, konfiguriert, die Regel- und/oder Steuersignale für die Ausweichtrajektorie zu erhalten, wenn das System beim Folgen der Ausweichtrajektorie von diesem oder dem anderen der automatisiert betreibbaren Fahrzeuge (1) keinen Straßenschaden (13) wahrnimmt, und die Regel- und/oder Steuersignale weiteren der automatisiert betreibbaren Fahrzeuge (1) bereitzustellen.

3. System nach einem der vorangehenden Ansprüche, wobei die automatisiert betreibbaren Fahrzeuge (1) jeweils mindestens einen Sensor zur Erfassung eines Abbildes des Straßenschadens (13) umfassen und das System konfiguriert ist, Daten des mindestens einen Senors zur Erfassung des Abbildes des Straßenschadens (13) einem Baulastträger der Straße zu senden zur Beseitigung des Straßenschadens (13) durch den Baulastträger und/oder die Daten einem Geodatendienst zu senden zur Kennzeichnung des Straßenschadens (13) in Karten-Updates.

4. System nach einem der vorangehenden Ansprüche, umfassend mehrere in einer Fahrbahnoberfläche (2) angeordnete Markierungselemente (11), wobei die automatisiert betreibbaren Fahrzeuge (1) jeweils mindestens einen Sensor (12) zum Erfassen von Feldstärken einzelner der mehreren Markierungselemente (11) umfassen und das System konfiguriert ist, in Abhängigkeit der von diesen Sensoren (12) gemessenen Feldstärken die Position des jeweiligen automatisiert betreibbaren Fahrzeuges (1) relativ zu den Markierungselementen (11) zu erhalten.

5. System nach einem der vorangehenden Ansprüche, wobei die automatisiert betreibbaren Fahrzeuge (1) jeweils umfassen
• einen Speicher, in dem die Position des Straßenschadens (13) und die Information des wahrgenommenen Straßenschadens (13) lokal gespeichert wird;
• eine Fahrzeugkommunikationseinheit, die die Position und die Information des wahrgenommenen Straßenschadens (13) sendet und/oder empfängt.

6. System nach einem der Ansprüche 1 bis 4, umfassend einen Cloud-Speicher und konfiguriert für Cloud Computing, wobei die automatisiert betreibbaren Fahrzeuge (1) jeweils eine Fahrzeugkommunikationseinheit umfassen, die die Daten des mindestens einen Sensors (3) des jeweiligen automatisiert betreibbaren Fahrzeuges (1) und/oder die Position und die Information des wahrgenommenen Straßenschadens (13) an den Cloud-Speicher sendet und/oder die Position und die Information des wahrgenommenen Straßenschadens (13) von dem Cloud-Speicher empfängt.

7. System nach einem der vorangehenden Ansprüche, konfiguriert, wenigstens auf den Daten des jeweils mindestens einen Sensors (3) zur Erfassung von Luftschall eine Geräusch basierte Klassifizierung des Straßenschadens (13) durchzuführen, wobei das System konfiguriert ist, aus den Daten des Sensors (3) zur Erfassung von Luftschall ein Mel-Spektrogramm zu erhalten oder Mel-Frequenz-Cepstrum-Koeffizienten zu extrahieren, das Mel-Spektrogramm oder die Mel-Frequenz-Cepstrum-Koeffizienten durch ein Maschinenlernmodell zu prozessieren, das trainiert ist, aus in das Maschinenlernmodell eingegebenen Mel-Spektrogrammen oder Mel-Frequenz-Cepstrum-Koeffizienten die Straßenschäden (13) zu inferieren, die das den Mel-Spektrogrammen oder Mel-Frequenz-Cepstrum-Koeffizienten zugrunde liegende Geräusch verursachen.

8. System nach einem der vorangehenden Ansprüche, konfiguriert, auf den Daten des jeweils mindestens einen Sensors (3) zur Erfassung von Luftschall eine Anomalieerkennung durchzuführen, wobei das System konfiguriert ist, eine Vorverarbeitung der Daten basierend auf Mel-Spektrogrammen, Kurzzeit-Fourier-Transformationen oder Mel-Frequenz-Cepstrum-Koeffizienten zu erhalten, die vorverarbeiteten Daten mit gleichermaßen vorverarbeiteten Daten aus bekannten Verkehrssituationen zu vergleichen, wobei das System konfiguriert ist, einen Ausreißererkennungsalgorithmus auszuführen zur Erkennung von Anomalien in den Daten.
